(19)

Europäisches
Patentamt
European
Patent Office
Office européen
des brevets

(11) **EP 2 477 112 A1**

(12) **EUROPEAN PATENT APPLICATION**

(43) Date of publication:
 **18.07.2012 Bulletin 2012/29**

(51) Int Cl.:
 ***G06F 9/48*** *(2006.01)*

(21) Application number: **10380163.5**

(22) Date of filing: **29.12.2010**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**

(71) Applicant: **Basque Center for Applied
 Mathematics
 48160 Derio (Bizkaia) (ES)**

(72) Inventors:
 • **URTZI AYESTA MORATE
 48100 Mungia (Vizcaya) (ES)**
 • **INA MARIA VERLOOP
 48100 Mungia (Vizcaya) (ES)**

(74) Representative: **Urteaga Simarro, José Antonio
 C/Principe de Vergara, 31
 28001 Madrid (ES)**

(54) **Method for efficient scheduling in a resource-sharing system**

(57)  Scheduling method, so that several jobs (n) can share the resources of at least one processor (1) in a computer system or data-processing system, wherein jobs (n) are grouped in queues or classes (i) known to share the same service requirement distribution function $F_i(x)$, the method being characterized in that it comprises the steps of estimating the expected remaining service time of each job (n) in each class (i), selecting at least one job (n) where highest priority is given to the job (n) with the minimum quotient of the estimated expected remaining service time and a preference value assigned to the job (n), removing the selected job (n) from the class (i), executing the selected job (n) for a predetermined time quantum, and, once the time quantum is finished, if the job (n) is not completed, putting the job (n) back in the queue or class (i).

FIG.1

EP 2 477 112 A1

## Description

## Technical field

The invention refers to a method in order to schedule the access to a processor resource on computer systems and data-processing systems. The invention can be applied in any resource-sharing system, whereby a resource-sharing is understood to be any system in which a resource is shared among multiple concurrent jobs. Examples of such systems are personal computers, server-farms, operating systems, etc.

## State of the art

In the field of computer systems and data-processing systems, processor resources are limited and must be shared by multiple concurrent jobs. This means that the processor resources are assigned subsequently, for a certain amount of time, to different jobs. Example of computer systems and data-processing systems where processor resources are to be shared by different jobs are: personal computers, server farms, operating systems, ATM technologies, etc.

Processor resources can be a single processor in a single-processor system or multiple processors in a multiple-processor system. In turn, jobs are understood to be jobs, tasks, threads (in single-threaded or multi-threaded applications), etc.

The order in which the jobs are to be served by the processor resources is decided by scheduling methods performed in the computer systems and data-processing systems. Scheduling methods can range from very simple methods such as FIFO assignation, where the processor resources are assigned to the jobs in the order they requested access to the processor resources, to more complex methods where jobs are classified by priority and assigned processor resources depending on their priority. Priority-based methods allow an efficient distribution of processor resources, as higher-priority jobs are not slowed down having to wait for lower-priority jobs to be performed.

Examples of scheduling methods are given in US5987492, US7194741 and US20070183320. US5987492 describes a time-sharing system in which the capacity of the processor is equally shared among the jobs, this policy being known in the literature as Processor-Sharing. For example, if two jobs are present, each one will obtain roughly 50% of the server's processing time. US20070183320 describes a variant of Processor-Sharing in which a vector of weights is used in order to regulate the fraction of server's time assigned to each job. US7194741 describes a Weighted Fair Queueing (WFQ) scheduling method where each task has a weight, wherein the weights determine the fraction of time that each task is served. Thus, if $g_j$ denotes the weight associated to task j, then WFQ roughly gives to task j a fraction of the total server's time equal to $g_j/(g_1+...+g_j)$, when there

are J tasks in the system.

The aim of the present invention is to provide an alternative method for efficient scheduling in a resource-sharing system, which minimizes the number of jobs in a saturated system, that is, when there are always jobs in the system. In other words, the objective of the invention is to provide a scheduling method that, when applied in a saturated computer system or data-processing system, provides a better performance than conventional methods, reducing to a greater extent the number of jobs waiting to be served by the processor.

## Brief description of the invention

It is the object of the invention to define a scheduling method, so that several jobs can share the resources of at least one processor in a computer system or data-processing system. In the method according to the invention, jobs are grouped in queues or classes known to share the same service requirement distribution function $F_i(x)$ of service requirement random variable $S_i$. Then, the scheduling method according to the invention comprises the following steps: estimating the expected remaining service time of job (n) in each class (i); selecting at least one job (n), giving highest priority to the job (n) with the minimum quotient of the estimated expected remaining service time and a priority value assigned to the job (n); removing the selected job (n) from the class (i); executing the selected job (n) for a predetermined time quantum; once the time quantum is finished, if the job (n) is not completed, putting the job (n) back in the queue or class (i).

The scheduling method according to the invention is applicable, in general, to any computer system or data-processing system where jobs are generated and must be processed. The scheduling method of the invention can be applicable in both single-processor and multi-processor systems.

The invention applies mainly in systems where the scheduler does not know the exact service requirement of jobs. This is the case of the Internet for example, where intermediate routers do not know the amount of packets that a connection transmits. It is also applicable for its use in CPU's, if the processor does not know the total running time of the applications. It can also be of interest in systems where processors are launched remotely.

The invention proposes several preferred embodiments for estimating the expected remaining service time of each job, as will be explained in detail in this document. Some of these embodiments, as will be seen, are particularly interesting for saturated systems, in which there are constantly jobs pending to be served by the processor. However, it must be noted that the method performs very well also in non-saturated conditions, it therefore being valid for systems working under any workload scenario.

Brief description of drawings

The details of the invention are shown in the following figures, which do not intend to limit the scope of the invention:

- Figure 1 shows a schematic diagram of a system where the scheduling method according to the invention is applied.
- Figure 2 shows a graph of the number of jobs waiting to be served in a two-class system example, as a function of *r* (WFQ ratio).

Detailed description of the invention

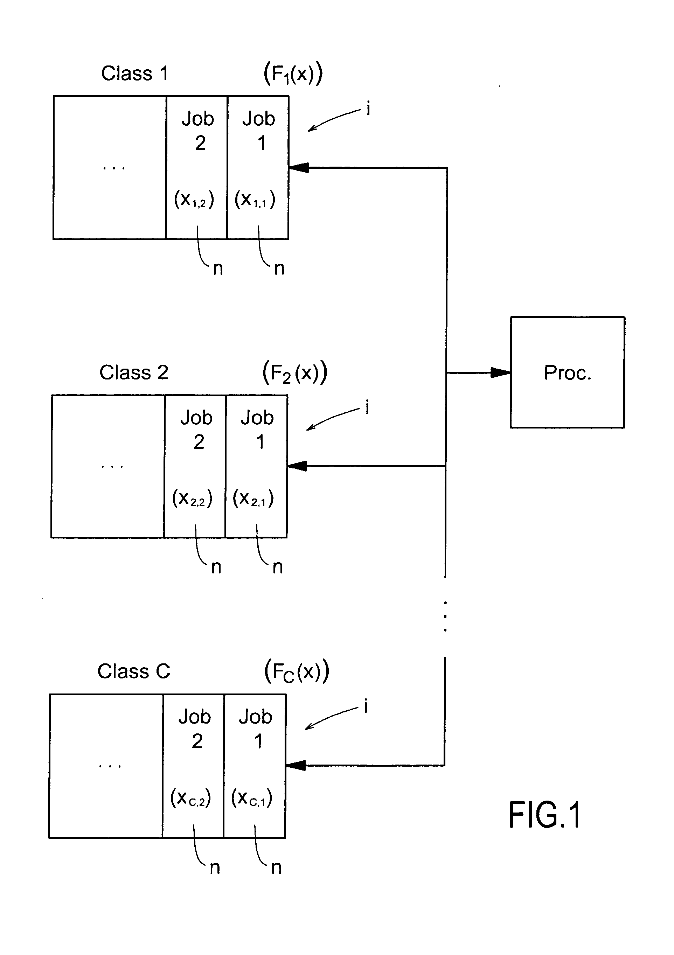

The invention refers to a scheduling method which allows that different jobs can access and share processor resources on a computer system or data-processing system, provided with a single or multiple processors. Figure 1 shows an example of a system performing the method according to the invention. As shown in the figure, different jobs (n) attempt to access and share a single processor (1). The invention can be applied to multiple-processor systems, even though this specific embodiment is showing one processor (1) only.

The jobs (n) waiting to be served by the processor (1) are each requiring a certain amount of service, hereinafter referred to as 'service requirement', from the processor (1). The service requirement s of a job is distributed as random variable S. In the system where the method according to the invention to be applied, the exact service requirement s of each job (n) is not known. However, what is known is which jobs (n) share the same service requirement distribution function (i.e., probability function). Then, as shown in the picture, jobs (n) are grouped in queues or classes (i) known to share the same service requirement distribution function $F_i(x)$ of service requirement random variable $S_i$. More precisely, jobs (n) having the same service requirement distribution function are grouped in respective classes; therefore, each class is characterized by a single service requirement distribution function $F_i(x)$ and a single $S_i$ (even though current specific service requirement values of each job in the class may be different).

The scheduling method according to the invention comprises the following steps:

a) Estimating the expected remaining service time of each job (n) in each class (i), i.e., estimating how much each job (n) has still to be served.

b) Selecting at least one job (n), giving highest priority to the job (n) with the minimum quotient of the estimated expected remaining service time and a preference value assigned to the job (n). If the preference value of all jobs (n) is equal (e.g. 1), then the at least one job (n) is selected according to the estimated expected remaining service time, more precisely, highest priority is given to the job (n) directly having the lowest estimated expected remaining service time left. If, on the contrary, jobs (n) are assigned with different preference values (for example if some jobs (n) are of higher cost than others), then the selection is weighed by the preference values, so that a job (n) having a not so low estimated expected remaining service time but a high preference can be chosen before another job (n) having a lower estimated expected remaining service time but a lower preference.

c) Once a job (n) is selected to be run or performed by the processor (1), removing the selected job (n) from the class (i).

d) Executing the selected job (n) for a predetermined time quantum. The time quantum can be any predetermined time duration. If the quantum is infinite, the scheduling is non-preemptive, that is, the job will be served until it is served completely.

e) Once the time quantum is finished, if the job (n) is not completed, putting the job (n) back in the queue or class (i).

In a specific embodiment, once the quotient of the estimated expected remaining service time and the assigned preference value of each job (n) is calculated, the step of selecting a job (n) out of all the available jobs (n) in all queues (i) consists in directly selecting the job (n) with the minimum quotient. In other words, the method gives total priority to the job (n) having the lowest quotient (the lowest expected remaining service time, in case all jobs (n) share the same preference value). This embodiment is especially interesting under certain circumstances (Poisson arrivals and infinite quantum, or exponential service time distribution), where it has been proved mathematically that this strict priority discipline most minimizes the number of jobs in the system.

In another embodiment, once the quotient of the estimated expected remaining service time and the assigned preference value of each job (n) is calculated, the step of selecting a job (n) out of all the available jobs (n) in all queues (i) comprises performing a Weighted Fair Queuing (WFQ) method where higher job weights are assigned to jobs having lower quotient of the estimated expected remaining service times and their preference values. This means that it will be most probable, but not granted, to choose the job (n) having the lowest quotient of the estimated expected remaining service times and their preference values. A WFQ method is described, e.g., in US7194741 and provides the benefit (when compared to the previous embodiment) that all jobs have a positive probability of being served in a time quantum, and from a fairness point of view this can be a desirable property of the system.

The invention proposes three preferred embodiments for estimating the expected remaining service time of each job (n) that is waiting to be served by the processor (1) or multiple processors.

In a first embodiment, the jobs (n) in each class (i) are characterized by an attained service value $x_{i,n}$ that represents the amount of service the job (n) has already been served (said attained service value $x_{i,n}$ being known). Then, the expected remaining service time of each job (n) is calculated by first calculating the generic expected remaining service time, for each class (i), as a function of the attained service x, as follows:

$$R_i(x) = \frac{\int_x^\infty [1 - F_i(z)]dz}{1 - F_i(x)},$$

where $F_i(x)$ is the service requirement distribution function of class (i) and is known. Once the generic expected remaining service time $R_i(x)$ of each class (i) is known, the specific estimated expected remaining service time of each job (n) in each class (i) is obtained as $R_i(x_{i,n})$.

After a job (n) is selected, run by the processor (1) for a predetermined time quantum, and returned to its queue or class (i) if not completed, the method comprises the additional step of incrementing the attained service value $x_{i,n}$ of the selected job (n) with the predetermined time quantum. This allows $x_{i,n}$ to be correctly updated before the next calculation of $R_i(x_{i,n})$.

The service requirement distribution function of each class (i), referred to as $F_i(x)$, is known, as mentioned. $F_i(x)$ can be either previously known because the class (i) contains jobs that are statistically described and featured in the state of the art, as is the case of e-mails or web pages on the internet, etc. If, for a specific class, $F_i(x)$ is not described in the art, the invention proposes a method of calculating $F_i(x)$, based on storing the service requirement value $s_{i,n}$ of finished jobs (n) of said class (i), which means storing a set of values of service requirement random variable $S_i$, and calculating the distribution function $F_i(x)$ of said random variable $S_i$. The service requirement distribution function can therefore be estimated by the invention. This estimation can be performed once, periodically, or at any time interval that is applicable. Storing the service requirement value $S_{i,n}$ can be done each time a job (n) is finished, or every certain number of jobs (n), or under any other criterion.

The second preferred embodiment for estimating the expected remaining service time of each job (n) that is waiting to be served by the processor (1) is especially interesting for saturated systems, i.e., systems where the processor (1) is continuously being requested and there are always jobs (n) waiting to be served. In this case, the method according to the invention comprises the step of estimating the expected remaining service time of all jobs (n) in each class (i) (the invention assumes, in this embodiment, that all jobs (n) in each class (i) share the same expected remaining service time, which proves to be an acceptable assumption in saturated conditions) as

$$W_i = \frac{\int_0^\infty z[1 - F_i(z)]dz}{\int_0^\infty [1 - F_i(z)]dz},$$

where $F_i(x)$ is the service requirement distribution function of class (i) and is known (same reasoning as in the previous embodiment applies). In saturated systems, the expected remaining service time of each job (n) in a class (i) can be considered to be equal to the estimated expected remaining service time of the class (i).

The third preferred embodiment for estimating the expected remaining service time of each job (n) that is waiting to be served by the processor (1) is also interesting for saturated systems. In this embodiment, the expected remaining service time of all jobs (n) in each class (i) (the invention assumes, in this embodiment, that all jobs (n) in each class (i) share the same expected remaining service time, which proves to be an acceptable assumption in saturated conditions) is estimated by

$$W_i = \frac{E(S_i^{(2)})}{2 \cdot E(S_i^{(1)})},$$

where $E(S_i^{(1)})$ is the mean value of service requirement $S_i$ and is known, and $E(S_i^{(2)})$ is the second moment of service requirement $S_i$ and is known. The mean value and second moment of service requirement $S_i$ of each class (i) can be previously known because the class (i) contains jobs that are statistically described and featured in the state of the art, as is the case of e-mails or web pages on the internet, etc. Alternatively, the invention proposes a method of calculating said mean value and second moment, based on storing the service requirement value $S_{i,n}$ of finished jobs (n) of said class (i), which means storing a set of values of service requirement random variable $S_i$, and calculating the mean value and second moment of said stored values. This calculation can be performed once, periodically, or at any time interval that is applicable. Storing the service requirement value $S_{i,n}$ can be done each time a job (n) is finished, or every certain number of jobs (n), or under any other criterion.

In the second and third embodiments proposed by the invention, where a class (i) is first selected, the latter selection of a job (n) in the selected class (i) is performed according to any internal discipline, for example First-Come-First-Served, Last-Come-First-Served, or Processor Sharing (e.g., as in US5987492).

The first embodiment of the invention, where the expected service requirement of each job (n), $R_i(x_{i,n})$, is calculated, is precise in all situations and not just in saturation conditions, but unfortunately can be very time consuming since the $R_i(x_{i,n})$ of every selected job (n) has to be recalculated after job (n) finishes being served by the processor (1). The second and third embodiments are interesting because they calculate class-associated parameters ($W_i$) which do not vary over time, and therefore do not have to be re-calculated every time a job (n) is served. The second and third embodiments are therefore more simple, requiring a lower number of operations to be performed, therefore being very interesting in saturated conditions (though applicable in any condition). The second and third embodiments are also useful when there is no history available about how much amount of service a job has received (in other words, in situation where $x_{i,n}$ of certain jobs (n) are not known).

The scheduling method of the invention is preferably, but not necessarily, performed by the processor (1) whose resources are to be shared.

An example of system and application of the method is explained hereafter, so to help prove and understand the advantages of the invention.

Example

This example will show how the invention reduces the number of jobs waiting to be served by a processor. It must be noted that a typical performance criteria in systems is the number of jobs in the system, since minimizing the expected number of jobs is equivalent to minimizing the expected delay as experienced by a job. Therefore, studying the scheduling method's ability to reduce the number of jobs in the system will give an idea of its overall performance.

Let there be a system with two classes (class 1 and class 2). Let 11 and 12 denote the job arrival rate of class 1 and class 2, respectively. The mean arrival of work to the system is then $11 \cdot E[S_1^{(1)}] + 12 \cdot E[S_2^{(1)}]$. Let V denote the capacity of the processor. Then, necessarily it is true that $11 \cdot E[S_1^{(1)}] + 12 \cdot E[S_2^{(1)}] < V$, otherwise the system will be unstable, that is, more work arrives to the system than what can be served. More specifically, in the system of the example, the working conditions are such that the job arrival in relation to the processor capacity is $(11 \cdot E[S_1^{(1)}] + 12 \cdot E[S_2^{(1)}]) / V = 0.90$. Also, the system is characterised in that both classes have the same preference value, and in that $W_1 / W_2 = 0.1$, which means that the expected remaining service time of the jobs in class 2 is ten times the expected remaining service time of the jobs in class 1.

As described above, the method according to the invention comprises selecting at least one job (n), giving highest priority to the job (n) with the minimum quotient of the estimated expected remaining service time and a preference value assigned to the job (n). This selection can be done preferably by directly selecting the job (n) with the minimum quotient, or by performing a Weighted Fair Queuing (WFQ) method where higher job weights are assigned to jobs having lower quotient of the estimated expected remaining service times and their preference values. In this example, a WFQ method is used, with a generic r, which means that the weight of class 1 is r and the weight of class 2 is 1.

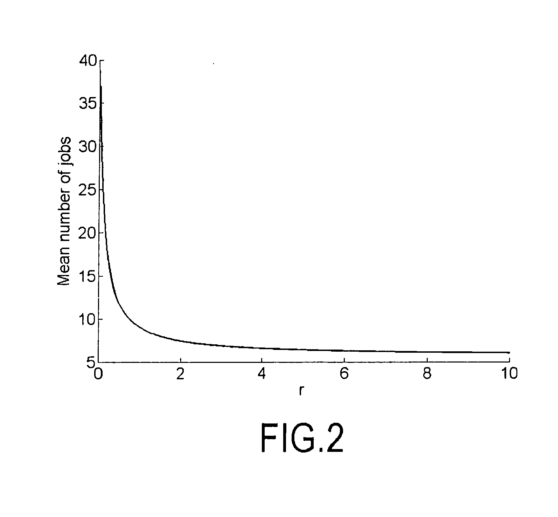

Figure 2 shows a graph of the mean number of jobs waiting to be served in this two-class system example, as a function of r (WFQ ratio).

Values of r lower than 1 are not interesting, as they mean giving preference to the class having a higher W and therefore, as shown by the graph, lead to a very high number of jobs waiting to be served (over 10 and increasing as r gets closer to zero).

If r is equal to 1, which means that both classes have the same chance of being chosen, the method is a conventional Processor-Sharing method. As shown in the graph, the mean number of jobs pending to be served would approximately be 10.

If r is greater than one, in other words, higher job weights are assigned to jobs having lower W (method according to the invention), it can be seen in the graph that the number of jobs waiting to be served is lower than when r = 1, which means that the WFQ (r greater than 1) method of the invention is better than Processor Sharing (r = 1). Also, it can be seen that as r grows, the number of jobs pending in the system decreases exponentially; in other words, the higher the weight assigned by the invention to class 1, the lower the number of jobs pending in the system, at an exponential pace.

When r is close to infinite, the WFQ method is equivalent to directly choosing the class with the lowest W (class 1, in the example), which is an alternative also claimed by the invention. As shown in the graph, directly choosing the class with the lowest W is efficient as it leads to the lowest number of jobs pending in the system, approximately 6.

**Claims**

1. Scheduling method, so that several jobs (n) can share the resources of at least one processor (1) in a computer system or data-processing system, wherein jobs (n) are grouped in queues or classes (i) known to share the same service requirement distribution function $F_i(x)$ of service requirement random variable $S_i$, the method being **characterized in that** it comprises the following steps:

   a) estimating the expected remaining service time of each job (n) in each class (i),
   b) selecting at least one job (n), giving highest priority to the job (n) with the minimum quotient of the estimated expected remaining service time and a preference value assigned to the job (n),

c) removing the selected job (n) from the class (i),

d) executing the selected job (n) for a predetermined time quantum,

e) once the time quantum is finished, if the job (n) is not completed, putting the job (n) back in the queue or class (i).

2. Scheduling method, according to claim 1, **characterized in that** the step of selecting a job (n), giving highest priority to the job (n) with the minimum quotient of the estimated expected remaining service time and a preference value assigned to the job (n), consists in directly selecting the job (n) with the minimum quotient of the estimated expected remaining service time and the preference value of the job (n).

3. Scheduling method, according to claim 1, **characterized in that** the step of selecting a job (n), giving highest priority to job (n) with the minimum quotient of the estimated expected remaining service time and a preference value assigned to the job (n), comprises performing a Weighted Fair Queuing (WFQ) method where higher job weights are assigned to jobs having lower quotient of the estimated expected remaining service times and their preference values.

4. Scheduling method, according to claim 1, **characterized in that** the jobs (n) in each class (i) are **characterized by** an attained service value $x_{i,n}$ that represents the amount of service the job (n) has already been served and that is known, and in that the expected remaining service time of each job (n) is estimated by calculating the generic expected remaining service time, for each class (i), as a function of the attained service x, as follows:

$$R_i(x) = \frac{\int_x^\infty [1 - F_i(z)]\,dz}{1 - F_i(x)},$$

where $F_i(x)$ is the service requirement distribution function of class (i) and is known, and by then calculating the specific estimated expected remaining service time of each job (n) in each class (i) as $R_i(x_{i,n})$, and in that the method comprises the additional step of incrementing the attained service value $X_{i,n}$ of the selected job (n) with the predetermined time quantum, once the job (n) is put back in the queue or class (i) if not completed.

5. Scheduling method, according to claim 1, **characterized in that** the expected remaining service time of each job (n) is estimated by estimating the expected remaining service time of all jobs (n) in the class (i) as

$$W_i = \frac{\int_0^\infty z[1 - F_i(z)]\,dz}{\int_0^\infty [1 - F_i(z)]\,dz},$$

where $F_i(x)$ is the service requirement distribution function of class (i) and is known.

6. Scheduling method, according to claim 4 or 5, **characterized in that** the service requirement distribution function $F_i(x)$ of a class (i) is known by storing the service requirement value $s_{i,n}$ of finished jobs (n) of said class (i), which means storing a set of values of service requirement random variable $S_i$, and calculating the distribution function $F_i(x)$ of said random variable $S_i$.

7. Scheduling method, according to claim 1, **characterized in that** the expected remaining service time of each class (i) is calculated by

$$W_i = \frac{E(S_i^{(2)})}{2 \cdot E(S_i^{(1)})},$$

where $E(S_i^{(1)})$ is the mean value of service requirement $S_i$ and is known, and $E(S_i^{(2)})$ is the second moment of service requirement $S_i$ and is known.

8. Scheduling method, according to claim 7, **characterized in that** $E(S_i^{(1)})$ and $E(S_i^{(2)})$ of a class (i) are estimated by storing the service requirement value $s_{i,n}$ of finished jobs (n) of said class (i), which means storing a set of values of service requirement random variable $s_i$, and calculating the mean value and second moment of said set of values, respectively.

9. Scheduling method, according to claims 5 or 7, **characterized in that** once a class (i) is selected, a job (n) is selected according to a First-Come-First-Served, Last-Come-First-Served, or Processor Sharing discipline.

**10.** Scheduling method, according to claim 1, **characterized in that** the steps are performed by the processor (1) or processors whose resources are to be shared.

Class 1 $\left(F_1(x)\right)$

| ... | Job 2 $(x_{1,2})$ | Job 1 $(x_{1,1})$ |
|---|---|---|

i

Class 2 $\left(F_2(x)\right)$

| ... | Job 2 $(x_{2,2})$ | Job 1 $(x_{2,1})$ |
|---|---|---|

i

Proc.

Class C $\left(F_C(x)\right)$

| ... | Job 2 $(x_{c,2})$ | Job 1 $(x_{c,1})$ |
|---|---|---|

i

FIG.1

FIG.2

Europäisches
Patentamt
European
Patent Office
Office européen
des brevets

# EUROPEAN SEARCH REPORT

**Application Number**

EP 10 38 0163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kenneth C. Sevcik: "Scheduling for Minimum Total Loss Using Service Time Distributions", Journal of the ACM, vol. 21, no. 01 January 1974 (1974-01), pages 66-75, XP002641671, ACM New York, NY, USA DOI: 10.1145/321796.321803 Retrieved from the Internet: URL:http://portal.acm.org/citation.cfm?id=321803 [retrieved on 2011-06-14] * abstract * * page 67, section 2, paragraph 1 - page 68, paragraph 5 * ----- | 1-10 | INV. G06F9/48 |
| X | Nicole Megow, Marc Uetz, Tjark Vredeveld: "Models and Algorithms for Stochastic Online Scheduling", MATHEMATICS OF OPERATIONS RESEARCH, vol. 31, no. 3 August 2006 (2006-08), pages 1-15, XP002641690, DOI: 10.1287/moor.1060.0201 Retrieved from the Internet: URL:http://www.mpi-inf.mpg.de/~nmegow/papers/sos_MOR05.pdf [retrieved on 2011-06-14] * abstract * * page 1, paragraph 1 - page 2, paragraph 3 * -/-- | 1-10 | TECHNICAL FIELDS SEARCHED (IPC) G06F |

The present search report has been drawn up for all claims

| Place of search | Date of completion of the search | Examiner |
|---|---|---|
| Munich | 29 July 2011 | Milasinovic, Goran |

EPO FORM 1503 03.82 (P04C01)

Europäisches
Patentamt

European
Patent Office

Office européen
des brevets

# EUROPEAN SEARCH REPORT

**Application Number**

EP 10 38 0163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | -& ANONYMOUS: "Models and Algorithms for Stochastic Online Scheduling -- Megow et al. 31 (3): 513 -- Mathematics of Operations Research",<br><br>2006, XP000002656712,<br>Retrieved from the Internet:<br>URL:http://mor.journal.informs.org/cgi/content/abstract/31/3/513<br>[retrieved on 2011-06-14]<br>* provides publication data for XP002641690 *<br>----- | 1-10 | |
| X | Susan H. Xu, Srikanta P.R. Kumar, Pitu B. Mirchandani: "Scheduling stochastic jobs with increasing hazard rate on identical parallel machines",<br>Computers & Operations Research,<br>vol. 19, no. 6<br>1992, pages 535-543, XP002641691,<br>Elsevier B.V.<br>DOI: 10.1016/0305-0548(92)90008-S<br>Retrieved from the Internet:<br>URL:http://www.sciencedirect.com/science/article/pii/030505489290008S<br>[retrieved on 2011-06-14]<br>* abstract *<br>* page 535, section "Scope and Purpose" *<br>* page 536, paragraph 1 - page 538, section 3, paragraph 3 *<br>----- | 1-10 | TECHNICAL FIELDS SEARCHED (IPC) |

The present search report has been drawn up for all claims

| Place of search | Date of completion of the search | Examiner |
|---|---|---|
| Munich | 29 July 2011 | Milasinovic, Goran |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................................................
& : member of the same patent family, corresponding
document

EPO FORM 1503 03.82 (P04C01)

**EP 2 477 112 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5987492 A
- US 7194741 B
- US 20070183320 A